# EUROPÄISCHE PATENTSCHRIFT

(11) **EP 2 530 015 B1**
(45) Veröffentlichungstag und Bekanntmachung des Hinweises auf die Patenterteilung: **11.01.2017**
(21) Anmeldenummer: 12169813.8
(22) Anmeldetag: 29.05.2012
(51) Int. Cl.: B64D 15/16, B64C 27/72

(54) **Verfahren zum Enteisen von Rotorblättern eines Hubschraubers und Vorrichtung zur Durchführung des Verfahrens an dem Hubschrauber**
Method for de-icing the rotor blades of a helicopter and device for performing the method on the helicopter
Procédé de dégivrage de lames de rotor d'un hélicoptère et dispositif de réalisation du procédé sur l'hélicoptère

(30) Priorität: 01.06.2011 DE 102011050801
(43) Veröffentlichungstag der Anmeldung: 05.12.2012
(73) Patentinhaber: Deutsches Zentrum für Luft- und Raumfahrt e.V., 51147 Köln (DE)
(72) Erfinder: Schulz, Martin, 38108 Braunschweig (DE); Opitz, Steffen, 38104 Braunschweig (DE); Riemenschneider, Johannes, 38106 Braunschweig (DE)
(74) Vertreter: REHBERG HÜPPE + PARTNER

(56) Entgegenhaltungen:
- DE-A1- 10 304 530
- DE-A1-102004 060 675
- US-A- 4 875 644

## Beschreibung

### TECHNISCHES GEBIET DER ERFINDUNG

Die Erfindung bezieht sich auf ein Verfahren zum Enteisen von Rotorblättern eines Hubschraubers sowie auf eine Vorrichtung zur Durchführung dieses Verfahrens und einen Hubschrauber mit einer solchen Vorrichtung.

Unter bestimmten Wetterbedingungen kann sich an den Rotorblättern eines Hubschraubers Eis bilden. Dieses Eis kann zu starken Vibrationen und Unwuchten des Rotors führen. Ebenso kann es dazu kommen, dass die Antriebsleistung des Hubschraubers nicht ausreicht, um gegen einen durch das Eis erhöhten Strömungswiderstand der Rotorblätter zu arbeiten. Im schlimmsten Fall treten Strömungsablösungen an den vereisten Rotorblättern auf, die zum Absturz des Hubschraubers führen.

Vielfach gilt, dass Hubschrauber in Gebieten, in denen eine Vereisung ermöglichende Wetterbedingungen herrschen, nicht fliegen dürfen. Das heißt, solche Gebiete müssen weiträumig umflogen werden, und in einem solchen Gebiet befindliche Hubschrauber dürfen nicht starten.

### STAND DER TECHNIK

Verschiedene Enteisungstechniken für Rotorblätter von Hubschraubern wurden bereits vorgeschlagen. Jedoch verhindern die schwierigen Bedingungen der rotierenden Rotorblätter, wie beispielsweise die auftretenden hohen Zentrifugallasten, die Verbindungen zwischen dem stehenden und dem rotierenden System, der abrasive Verschleiß an den Rotorblättern und dergleichen die praktische Anwendung vieler dieser Techniken.

Bei der nach dem Kenntnisstand der Erfinder einzigen kommerziell eingesetzten Enteisungstechnik für Rotorblätter von Hubschraubern wird elektrische Energie in Wärme umgewandelt und damit die Profilvorderkante der Rotorblätter beheizt, um Eis abzuschmelzen bzw. Eisbildung zu verhindern. Nachteile dieser Enteisungstechnik sind die Gefahr des erneuten Gefrierens des Wassers im hinteren Bereich des Profils der Rotorblätter und der sehr hohe Bedarf an elektrischer Energie.

Ein Verfahren zum Enteisen von Rotorblättern eines Hubschraubers und eine und eine Vorrichtung zur Durchführung dieses Verfahrens sind aus der DE 10 2004 060 675 A1 bekannt. Hier ist in oder hinter einer Trägerstruktur des jeweiligen Rotorblatts ein Piezoaktuator derart angeordnet und angebunden, dass das Rotorblatt oder zumindest ein vereisungsgefährdeter Teil desselben durch elektrische Ansteuerung des Piezoaktuators verformt, insbesondere in Resonanzschwingungen versetzt wird, um das Eis von dem Rotorblatt abzulösen. Durch die Lage des Piezoaktuators in der Trägerstruktur oder hinter der Trägerstruktur soll dieser besonders gut geschützt sein. Tatsächlich liegt er aber wie bei dem Stand der US 4,545,553 A1, von der die DE 10 2004 060 675 A1 ausgeht, an der Profilvorderkante, die auch als Erosionskante eines Rotorblatts bezeichnet wird. Indem die Trägerstruktur des jeweiligen Rotorblatts durch Ansteuerung des Piezoaktuators in Resonanzschwingungen versetzt wird, können stärkere Verformungen der vereisten Oberfläche erreicht werden, als wenn der Piezoaktuator nur statisch angesteuert wird. Diese stärkeren Verformungen erleichtern das Ablösen des Eises von der Oberfläche des Rotorblatts. Aus der DE 10 2004 060 675 A1 ist es auch bekannt, den Piezoaktuator zugleich als Vereisungsdetektor zu verwenden, indem mit dem Piezoaktuator die von einer etwaigen Vereisung abhängige Eigenfrequenz des jeweiligen Rotorblatts oder eine bei einer bestimmten Frequenz in den Piezoaktuator einkoppelbare Leistung erfasst wird, die sich ebenfalls mit der Vereisung des jeweiligen Rotorblatts ändert.

Aus der JP 2001253394 A ist es zum Enteisen von Rotorblättern eines Hubschraubers bekannt, Klappen an der Hinterkante der Rotorblätter, die sonst zur Schwingungsdämpfung des Rotors angesteuert werden, so anzusteuern, dass durch aerodynamische Kräfte Schwingungen der Rotorblätter angeregt werden, die Eis von den Rotorblättern ablösen. Nachteilig ist hier der Aufwand für die mechanische Ansteuerung der Klappen und die große Gefahr, dass gerade die Klappen vereisen und insoweit für eine effektive Enteisung der Rotorblätter nicht zur Verfügung stehen. Zudem sind keine erfolgreichen Einsätze dieser Technik bekannt.

Aus P. Wierach, J. Riemenschneider, S. Opitz und F. Hoffmann, "Experimental Investigation of an Active Twist Rotor unter Centrifugal Loads," Kazan, Russia: 2007 ist ein Individual Blade Control (IBC) genanntes Verfahren zum Reduzieren von Schwingungen und Lärm bei Hubschraubern bekannt. Bei diesem Verfahren werden die Rotorblätter durch stromab ihrer Profilvorderkanten in ihre Haut integrierte, bezüglich ihrer Kontraktionsrichtung unter einem spitzen Winkel zu der Längsachse des jeweiligen Rotorblatts verlaufende Piezoaktuatoren auf Torsion angesteuert. Berichtet wird, dass im Bereich von Torsionsresonanzschwingungen der Rotorblätter besonders große Amplituden der Auslenkung der Rotorblattspitzen um die Längsachse erreicht werden konnten, die über die statische Torsionsauslenkung der Blattspitzen der Rotorblätter deutlich hinausgingen.

Aus der DE 103 04 530 A1 ist ein verformbares aerodynamisches Profil bekannt. Um eine Torsion des aerodynamischen Profils zu ermöglichen, sind d33-Piezoaktuatoren in analoger Weise auf beiden Seiten der jeweiligen Deckhaut so angeordnet, dass deren Längenänderung bei elektrischer Beaufschlagung im Wesentlichen in Richtung der Deckhautebene erfolgt. Die Piezoaktuatoren auf der Ober- und Unterseite weisen jedoch in Bezug aufeinander eine andere Ausrichtung auf, indem sie in unterschiedlicher Richtung zur Profiltiefe angestellt sind. Durch diese gekreuzte Anordnung wird bei Betätigung der Piezoaktuatoren eine Torsion der Deckhaut bewirkt. Die d33-Piezoaktuatoren können in die druck- bzw. saugseitigen Deckhäute integriert sein.

Aus der US 4,875,644 A ist ein auf elektrischen Abstoßungskräften basierendes Trennsystem bekannt, dass unter anderem dazu geeignet sein soll, Vorderkanten an Flugzeugen zu enteisen. Zu diesen Vorderkanten zählen auch diejenigen von Rotorblättern von Hubschraubern. Mit den elektrischen Abstoßungskräften zwischen Leiterbahnen, die von einem Strom in unterschiedlichen Richtungen durchflossen werden, wird die jeweilige Vorderkante verformt. Bei einem an der Vorderkante eines Tragflügels ausgeführten bekannten System sollen neben Verformungen in Flügeltiefenrichtung auch Kräfte in Längsrichtung und Torsionskräfte in die Struktur des Tragflügels im Bereich seiner Vorderkante eingeleitet werden können, um die gewünschte Enteisung herbeizuführen.

Aus der US 2010/0031972 A1 sind ein Ultraschallschwingungssystem und ein Verfahren zum Entfernen/Verhindern von ungewolltem Aufbau von Ablagerungen auf Strukturen bekannt, das unter anderem zum Enteisen von Rotorblättern von Hubschraubern vorgesehen ist. Dabei kann die Ultraschallwelle mit einer Resonanzfrequenz der angeregten Struktur in das jeweilige Rotorblatt eingekoppelt werden.

Aus der DE 10 2004 060 675 A1 ist es zur Enteisung eines Bauteils an einem Fluggerät, insbesondere eines Rotorblatts eines Hubschraubers, unter Verwendung eines elektromechanischen Piezowandlers bekannt, das Bauteil selbst durch geeignete elektrische Ansteuerung des Piezowandlers derart zu verformen, dass sich auf dem Bauteil gebildetes Eis löst. Dabei sollen insbesondere im Falle eines Bauteils mit geringer Steifigkeit durch eine geeignete elektrische Ansteuerung des Piezowandlers quasi-statische Verformungen im Bauteil erzeugt werden. Bei einem Bauteil mit hoher Steifigkeit soll hingegen durch eine geeignete elektrische Ansteuerung des Piezowandlers das Bauteil oder zumindest Teile des Bauteils zu einer Eigenschwingung angeregt werden.

Aus der WO 96 01 503 A1 ist es bekannt, den Anstellwinkel von Rotorblättern eines Hubschraubers mit höherer Frequenz als der Umlauffrequenz der Rotorblätter um ihre Rotorachse zu variieren, um vom Rotor induzierte Schwingungen und/oder Lärm zu minimieren.

Aus der US 4,501,398 A ist ein Enteisungssystem für Rotorblätter von Hubschraubern bekannt. Durch eine Torsion eines Aktuatorelements wird eine Deformation der Vorderkante des jeweiligen Rotorblatts eingeleitet, die sich längs der Vorderkante wellenförmig ausbreiten soll, um diese von Eis zu befreien.

### AUFGABE DER ERFINDUNG

Der Erfindung liegt die Aufgabe zugrunde, ein Verfahren zum Enteisen von Rotorblättern eines Hubschraubers sowie eine dafür geeignete Vorrichtung und einen mit der Vorrichtung ausgestatteten Hubschrauber aufzuzeigen, die bei hoher Wirksamkeit eine hohe Langzeitstabilität aufweisen und zugleich mit möglichst geringem Zusatzaufwand verbunden sind.

### LÖSUNG

Die Aufgabe der Erfindung wird durch ein Verfahren mit den Merkmalen des unabhängigen Patentanspruchs 1, durch eine Vorrichtung mit den Merkmalen des unabhängigen Patentanspruchs 4 und einen Hubschrauber mit den Merkmalen des Anspruchs 9 gelöst. Bevorzugte Ausführungsformen des neuen Verfahrens, der neuen Vorrichtung und des neuen Hubschraubers sind in den abhängigen Patentansprüchen definiert.

### BESCHREIBUNG DER ERFINDUNG

Bei dem neuen Verfahren zum Enteisen von Rotorblättern eines Hubschraubers, bei dem mit in die Haut der Rotorblätter integrierten Aktuatoren Verformungen von Oberflächen der Rotorblätter hervorgerufen werden, um Eis von den vereisten Oberflächen abzulösen, werden die ganzen Rotorblätter beim Hervorrufen der Verformungen mit den Aktuatoren um ihre Längsachsen tordiert. Durch die Verformungskopplung innerhalb der elastischen Struktur der einzelnen Rotorblätter werden durch die Torsion auch Biegeverformungen des Rotorblatts induziert, die eine aufgewachsene Eisschicht aufbrechen und von der Oberfläche des jeweiligen Rotorblatts ablösen. Bei einer sich über das gesamte Rotorblatt erstreckenden Torsion treten diese Biegeverformungen auch über die gesamte Länge des Rotorblatts und so insbesondere in allen Bereichen seiner Profilvorderkante auf, so dass das Rotorblatt insgesamt von Eis befreit wird.

Wenn mit den Aktuatoren Torsionsresonanzschwingungen der Rotorblätter angeregt werden, wozu die Aktuatoren mit den zugehörigen Eigenfrequenzen der Rotorblätter periodisch anzusteuern sind, können auch mit kleiner Erregerleistung vergleichsweise große Amplituden der Torsion und damit auch der damit gekoppelten Biegeverformungen hervorgerufen werden. Auf diese Weise können auch noch dünne und damit vergleichsweise elastische Eisschichten von den Rotorblättern abgelöst werden.

Die Verformungen der rotierenden Rotorblätter, um Eis von deren vereisten Oberflächen abzulösen, werden mit einer Frequenz hervorgerufen, die um ein nicht ganzzahliges Vielfaches größer als die Umlauffrequenz der rotierenden Rotorblätter ist. Hierdurch wir ein Crosstalking zwischen dem Enteisen und der Rotation der Rotorblätter und ihrem Anstellwinkel, der über ihren Umlauf um die Rotorachse variiert wird, soweit als möglich vermieden. Konkret können die die Verformungen der rotierenden Rotorblätter zum Enteisen mit einer Frequenz hervorgerufen werden, die eine Größenordnung des Zehnfachen der Umlauffrequenz aufweist. Dies ist häufig der Bereich der 2. Torsionseigenfrequenz. Hier sind die Auswirkungen auf die Flugeigenschaften des Hubschraubers gering. Bei dem erfindungsgemäßen Verfahren werden die Verformungen der rotierenden Rotorblätter jedoch immer mit einer verglichen mit Ultraschall sehr niedrigen Frequenz hervorgerufen. So liegt die Frequenz, mit der bei der vorliegenden Erfindung angeregt wird, immer unter 1.000 Hz. In aller Regel liegt sie unter 100 Hz oder noch deutlich tiefer.

Das erfindungsgemäße Verfahren ist zum Enteisen von Rotorblättern jedoch zur Anwendung im Flug vorgesehen.

Vorzugsweise werden die Verformungen der rotierenden Rotorblätter bei der vorliegenden Erfindung mit flächigen Aktuatoren hervorgerufen, die stromab der Profilvorderkanten der Rotorblätter in deren Haut integriert sind. Das heißt, die Aktuatoren liegen nicht im Bereich der starker Erosion ausgesetzten Profilvorderkante, sondern in stromab dahinter liegenden, weniger abrasiv beanspruchten Bereichen. Für die erfindungsgemäße Torsionsverformung der Rotorblätter ist dies sogar eine besonders günstige Position und kein Nachteil, so dass der volle Vorteil der geschützten Lage der Aktuatoren ausgenutzt werden kann.

Die Verformungen der rotierenden Rotorblätter werden mit Aktuatoren hervorgerufen, mit denen auch eine gewünschte Torsion der Rotorblätter stationär oder zyklisch, insbesondere mit der zwei- oder dreifachen Umlauffrequenz der rotierenden Rotorblätter, einstellbar ist. Das heißt, die Aktuatoren, die bei der vorliegenden Erfindung verwendet werden, haben eine Mehrfachfunktion. Neben dem Enteisen können sie auch einer Optimierung der Torsion der Rotorblätter im stationären oder dynamischen Bereich dienen, um beispielsweise Schwingungen oder Lärm bei dem jeweiligen Hubschrauber in an sich bekannter Weise zu unterdrücken.

Eine erfindungsgemäße Vorrichtung zur Durchführung des erfindungsgemäßen Verfahrens weist eine Ansteuereinrichtung zur Ansteuerung der in die Haut der Rotorblätter des Hubschraubers integrierten Aktuatoren auf, wobei die Aktuatoren die Rotorblätter zum Ablösen von Eis um ihre Längsachsen tordieren.

Die Ansteuereinrichtung steuert die Aktuatoren mit einer Frequenz an, die keinem ganzzahligen Vielfachen der Umlauffrequenz der rotierenden Rotorblätter entspricht, insbesondere wenn die Ansteuereinrichtung die Aktuatoren zum Anregen von Torsionsresonanzschwingungen der Rotorblätter ansteuert.

Die vorzugsweise stromab der Profilvorderkanten der Rotorblätter in deren Haut integrierten Aktuatoren sind besonders bevorzugt flächige Piezoaktuatoren. Diese weisen eine Kontraktionsrichtung auf, die unter einem Winkel kleiner als 90°, häufig unter einem Winkel aus dem Bereich von 30° bis 60°, d. h. zum Beispiel von ca. 45°, zu der Längsachse des jeweiligen Rotorblatts verläuft.

Konkret können die flächigen Piezoaktuatoren jeweils aus einer Vielzahl einzelner Keramikfasern bestehen, die in der Kontraktionsrichtung ausgerichtet sind. Derartige Piezoaktuatoren werden auch als Macro Fiber Composite Actuators (MFC) bezeichnet und sind in der US 6 629 341 näher beschrieben

Die Ansteuereinrichtung ist dazu ausgebildet, die Aktuatoren, wenn sie sie nicht zum Enteisen der Rotorblätter ansteuert, auf stationäre Torsionen oder auf zyklische Torsionen der Rotorblätter, insbesondere mit der zwei- oder dreifachen Umlauffrequenz der rotierenden Rotorblätter, anzusteuern, um Lärm und/oder Schwingungen des Hubschraubers zu unterdrücken. Während diese Ansteuerung also mit Höherharmonischen der Umlauffrequenz erfolgt, werden zum erfindungsgemäßen Enteisen der Rotorblätter Frequenzen für die Ansteuerung der Aktuatoren gewählt, die keinem ganzzahligen Vielfachen der Umlauffrequenz der rotierenden Rotorblätter entsprechen und die zudem tendenziell noch höher liegen.

Das Ansteuern zum Enteisen der Rotorblätter vollführt die Ansteuereinrichtung vorzugsweise in Intervallen. Zu Beginn jedes Intervalls kann die Ansteuereinrichtung die Aktuatoren zunächst so ansteuern, dass eine etwaige Vereisung der Rotorblätter durch eine sich verschiebende Energieaufnahme und/oder Eigenfrequenz der angesteuerten Torsionsschwingung der Rotorblätter erkannt wird. Grundsätzlich können natürlich auch anderen Vereisungssensoren eingesetzt werden, oder die Intervalle und deren Dauer werden aufgrund der Signale von allgemeinen Wettersensoren, wie beispielsweise Temperatur- und Luftfeuchtigkeitssensoren so festgelegt, dass eine sich aufbauende Vereisung der Rotorblätter sicher verhindert wird. Darüber hinaus kann ein Pilot des Hubschraubers eine Enteisung auch manuell einleiten, wenn er eine Eisbildung durch sich ändernde Reaktionen des Hubschraubers auf seine Steuersignale erkennt.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile von allen erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden.

### KURZBESCHREIBUNG DER FIGUREN

Die Erfindung wird im Folgenden unter Bezugnahme auf die beigefügten Zeichnungen näher erläutert und beschrieben.
- **Fig. 1**: skizziert die Anordnung von Aktuatoren an einem Rotorblatt mit Blickrichtung längs der Rotorachse; und
- **Fig. 2**: zeigt die durch Ansteuerung der Aktuatoren erreichbare Auslenkung des Rotorblatts gemäß Fig. 1.

### FIGURENBESCHREIBUNG

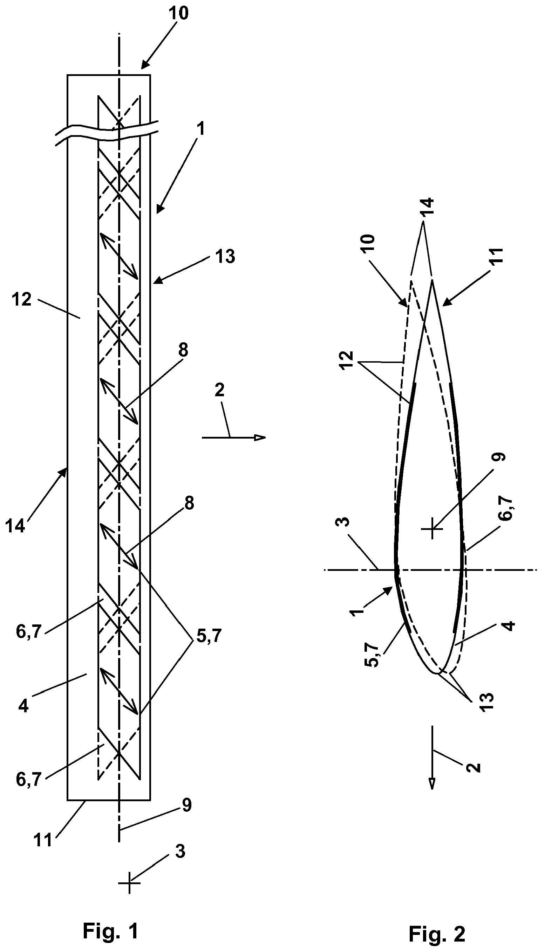

Das in **Fig. 1** skizzierte Rotorblatt 1 läuft in einer durch einen Pfeil 2 angedeuteten Drehrichtung um eine Rotorachse 3 um. Nicht dargestellt ist die mechanische Anbindung des Rotorblatts an die zugehörige Antriebswelle und auch die übliche Mechanik, um den Anstellwinkel des Rotorblatts 1 während seines Umlaufs um die Rotorachse 3 zur Kompensation seiner Anströmung bei einer Vorwärtsbewegung des Hubschraubers zu variieren. In die Haut 4 des Rotorblatts sind Aktuatoren 5 an der hier oben liegenden Saugseite des Rotorblatts und Aktuatoren 6 an der hier unten liegenden Druckseite des Rotorblatts 1 integriert. Dabei liegen die Aktuatoren typischerweise unterhalb der äußersten Schicht der Haut 4. Konkret handelt es sich jeweils um flächige Piezoaktuatoren 7, die mit ihren Kontraktionsrichtungen 8 unter einem spitzen Winkel zu der Längsachse 9 des Rotorblatts 1 ausgerichtet sind. Durch gleichsinnige Ansteuerung der Aktuatoren 5 und 6 wird eine Torsion des Rotorblatts 1 um seine Längsachse 9 hervorgerufen, die seine Blattspitze 10 gegenüber der Blattwurzel 11 auslenkt, wie dies in **Fig. 2** skizziert ist. Durch die Verformungskopplung innerhalb der elastischen Struktur des Rotorblatts 1 folgt aus der Torsion auch eine Biegeverformung des Rotorblatts 1. Daraus ergeben sich Verformungen der gesamten Oberfläche 12 des Rotorblatts 1, insbesondere im Bereich seiner Profilvorderkante 13, aber auch im Bereich seiner Profilhinterkante 14 und allen dazwischen liegenden Bereichen. Diese Verformung wird gezielt hervorgerufen, um eine Vereisung der Oberflächen 12 des Rotorblatts 1 zu beseitigen, indem aufgewachsenes Eis aufgebrochen und dann auch mit Hilfe der Rotationsbewegung um die Rotorachse 3 abgeworfen wird. Besonders große Amplituden der Torsionen des Rotorblatts 1 werden dabei dann erreicht, wenn mit den Aktuatoren 5 und 6 Torsionsresonanzschwingungen des Rotorblatts 1 angeregt werden. Wenn diese Torsionsresonanzschwingungen in einem höheren Frequenzbereich liegen, führt auch die Trägheit des aufgewachsenen Eises gegenüber der sich schnell verformenden Oberfläche 12 zur gewünschten Ablösung des Eises.

Mögliche Detailanordnungen der Aktuatoren 5 und 6 bei dem Rotorblatt 1 gehen aus P. Wierach, J. Riemenschneider, S. Opitz und F. Hoffmann, "Experimental Investigation of an Active Twist Rotor under Centrifugal Loads," Kazan, Russia: 2007; J. Riemenschneider, S. Opitz, P. Wierach, H. Mercier des Rochettes, L. Buchaniek und D. Joly, "Structural design and testing of Active Twist Blades - A comparison", in ERF - European Rotorcraft Forum, Hamburg, Germany, 2009; und J. Riemenschneider, S. Opitz, M. Schulz und V. Plaßmeier, "ACTIVE TWIST ROTOR FOR WIND TUNNEL INVESTIGATIONS", in SMASIS - Smart Materials, Adaptive Structures and Intelligent Systems, Philadelphia, Pennsylvania, USA, 2010 hervor.

Mit den hier beschrieben Anordnungen der Aktuatoren konnte das erfindungsgemäße Verfahren zum Enteisen eines Rotorblatts erfolgreich getestet werden.

Auch aus den vorliegenden Fig. 1 und 2 geht hervor, dass sich die Aktuatoren 5 und 6 weder bis an die Profilvorderkante 13 noch bis an die Profilhinterkante 14 heran erstrecken, sondern in einem weniger abrasiv belasteten Bereich dazwischen liegen. Dabei kann auf die Aktuatoren 6 an der Druckseite des Rotorblatts 1 ganz verzichtet werden, wenn die hier herrschenden Abrasionsbedingungen die Integrität der Aktuatoren 6 bedrohen, was auf der Saugseite des Profils des Rotorblatts 1 in aller Regel nicht der Fall ist.

### BEZUGSZEICHENLISTE

- 1: Rotorblatt
- 2: Pfeil
- 3: Rotorachse
- 4: Haut
- 5: Aktuator
- 6: Aktuator
- 7: Piezoaktuator
- 8: Kontraktionsrichtung
- 9: Längsachse
- 10: Blattspitze
- 11: Blattwurzel
- 12: Oberfläche
- 13: Profilvorderkante
- 14: Profilhinterkante

## Patentansprüche

1. Verfahren zum Enteisen von Rotorblättern (1) eines Hubschraubers unter Verwendung von in die Haut (4) der Rotorblätter (1) integrierten Aktuatoren (5, 6), mit denen zum Unterdrücken von Lärm und/oder Schwingungen des Hubschraubers stationäre oder zyklische Torsionen der Rotorblätter (1), vorzugsweise mit der zwei- oder dreifachen Umlauffrequenz der rotierenden Rotorblätter (1), eingestellt werden,
wobei
- mit den Aktuatoren (5, 6) Verformungen von Oberflächen (12) der Rotorblätter (1) mit einer Frequenz hervorgerufen werden, die um ein nicht ganzzahliges Vielfaches größer als die Umlauffrequenz der rotierenden Rotorblätter (1) ist, um Eis von den vereisten Oberflächen (12) abzulösen, und
- die Rotorblätter (1) zum Hervorrufen der Verformungen mit den Aktuatoren (5, 6) um ihre Längsachsen (9) tordiert werden.

2. Verfahren nach Anspruch 1, wobei zum Enteisen mit den Aktuatoren (5, 6) Torsionsresonanzschwingungen der Rotorblätter (1) angeregt werden.

3. Verfahren nach einem der vorhergehenden Ansprüche, wobei die Aktuatoren flächige Aktuatoren (5, 6) sind, die stromab der Profilvorderkanten (13) der Rotorblätter (1) in deren Haut (4) integriert sind.

4. Vorrichtung zur Durchführung des Verfahrens nach einem der vorhergehenden Ansprüche an einem Hubschrauber, die in die Haut (4) der Rotorblätter (1) des Hubschraubers integrierbare Aktuatoren (5, 6) zum Tordieren der Rotorblätter (1) um deren Längsachsen (9) und eine Ansteuereinrichtung zur Ansteuerung der Aktuatoren aufweist,
wobei die Ansteuereinrichtung dazu ausgebildet ist,
- die Aktuatoren (5, 6) zum Ablösen von Eis von vereisten Rotorblättern (1) mit einer Frequenz anzusteuern, die um ein nicht ganzzahliges Vielfaches größer als eine Umlauffrequenz der rotierenden Rotorblätter (1) ist, und
- die Aktuatoren (5, 6) zum Unterdrücken von Lärm und/oder Schwingungen auf stationäre Torsionen oder auf zyklische Torsionen der Rotorblätter (1), insbesondere mit der zwei- oder dreifachen Umlauffrequenz der rotierenden Rotorblätter (1), anzusteuern.

5. Vorrichtung nach Anspruch 4, wobei die Ansteuereinrichtung dazu ausgebildet ist, die Aktuatoren (5, 6) zum Anregen von Torsionsresonanzschwingungen der Rotorblätter (1) anzusteuern.

6. Vorrichtung nach Anspruch 4 oder 5, wobei die Ansteuereinrichtung dazu ausgebildet ist, die Aktuatoren (5, 6) in Intervallen anzusteuern.

7. Vorrichtung nach Anspruch 6, wobei die Ansteuereinrichtung dazu ausgebildet ist, zu Beginn jedes Intervalls die Aktuatoren (5, 6) zunächst so anzusteuern, dass eine etwaige Vereisung der Rotorblätter (1) durch eine sich verschiebende Energieaufnahme und/oder Eigenfrequenz der angesteuerten Torsionsschwingungen der Rotorblätter (1) erkannt werden kann.

8. Vorrichtung nach einem der Ansprüche 4 bis 7, wobei die Aktuatoren (5, 6) flächige Piezoaktuatoren (7) sind.

9. Hubschrauber mit Rotorblättern (1) und einer Vorrichtung nach einem der Ansprüche 4 bis 8, wobei die Aktuatoren (5, 6) stromab der Profilvorderkanten (13) der Rotorblätter (1) in deren Haut (4) integriert sind.

10. Hubschrauber nach Anspruch 9 mit einer Vorrichtung nach Anspruch 8, wobei die flächigen Piezoaktuatoren (7) eine Kontraktionsrichtung aufweisen, die unter einem spitzen Winkel zu der Längsachse (9) des jeweiligen Rotorblatts (1) verläuft.

## Claims

1. Method of de-icing rotor blades (1) of a helicopter using actuators (5, 6) integrated in the skin (4) of the rotor blades (1), by which stationary or cyclic torsions of the rotor blades (1) are set up, preferably at two times or three times the rotational frequency of the rotating rotor blades (1), for inhibiting noise and/or vibrations of the helicopter,
wherein
- deformations of surfaces (12) of the rotor blades (1) are evoked by means of the actuators (5, 6) at a frequency which is, by a non-integer multitude, higher than a rotational frequency of the rotating rotor blades (1) to detach ice from the iced over surfaces (12), and
- the rotor blades (1) are twisted about their longitudinal axes (9).

2. Method of claim 1, wherein for de-icing by means of the actuators (5, 6) torsional resonant vibrations of the rotor blades (1) are excited.

3. Method of any of the preceding claims, wherein the actuators are two-dimensional actuators (5, 6), which are integrated downstream of the profile front edges (13) of the rotor blades (1) in their skin (4).

4. Apparatus for carrying out the method of any of the preceding claims on a helicopter, the apparatus comprising actuators (5, 6) for twisting the rotor blades (1) about their longitudinal axes (9), which can be integrated in the skin (4) of the rotor blades (1) of the helicopter, and a controller for controlling the actuators,
wherein the controller is configured to
- activate the actuators (5, 6) for detaching ice from the iced over rotor blades (1) at a frequency which is, by a non-integer multitude, higher than a rotational frequency of the rotating rotor blades (1), and
- activate the actuators (5, 6) for inhibiting noise and/or vibrations for stationary torsions or cyclic torsions of the rotor blades (1), particularly at two times or three times the rotational frequency of the rotating rotor blades (1).

5. Apparatus of claim 4, wherein the controller is configured to activate the actuators (5, 6) for exciting torsional resonant vibrations of the rotor blades (1).

6. Apparatus of claim 4 or 5, wherein the controller is configured to activate the actuators (5, 6) at intervals.

7. Apparatus of claim 6, wherein the controller is configured to, at the beginning of each interval, at first activate the actuators (5, 6) such that a possible icing over of the rotor blades (1) may be acknowledged by a shifted energy consumption and/or eigenfrequency of the excited torsional vibrations of the rotor blades (1).

8. Apparatus of any of the claims 4 to 7, wherein the actuators (5, 6) are two-dimensional piezo actuators (7).

9. Helicopter with rotor blades (1) and an apparatus of any of the claims 4 to 8, wherein the actuators (5, 6) are integrated downstream of the profile front edges (13) of the rotor blades (1) in their skin (4).

10. Helicopter of claim 9 comprising an apparatus of claim 8, wherein the two-dimensional piezo actuators (7) have a contraction direction which runs under an acute angle to the longitudinal axis (9) of the respective rotor blade (1).

## Revendications

1. Procédé de dégivrage de lames de rotor (1) d'un hélicoptère, avec utilisation d'actionneurs (5, 6), intégrés dans l'enveloppe (4) des lames de rotor (1), avec lesquels, pour supprimer le bruit et/ou des vibrations de l'hélicoptère, des torsions stationnaires ou cycliques des lames de rotor (1) sont réglées, de préférence avec le double ou le triple de la fréquence de rotation des lames de rotor (1) en rotation,
- des déformations de surfaces (12) des lames de rotor (1) étant provoquées par les actionneurs (5, 6) avec une fréquence qui est plus grande, selon un multiple non entier, que la fréquence de rotation des lames de rotor (1) en rotation, afin de détacher la glace des surfaces (12) givrées, et
- les lames de rotor (1) étant tordues autour de leurs axes longitudinaux (9) pour provoquer les déformations avec les actionneurs (5, 6).

2. Procédé selon la revendication 1, des vibrations de résonance dues à la torsion des lames de rotor (1) étant excitées pour le dégivrage avec les actionneurs (5, 6).

3. Procédé selon l'une des revendications précédentes, les actionneurs étant des actionneurs (5, 6) plats qui sont intégrés dans l'enveloppe (4) des lames de rotor (1) en aval des arêtes avant profilées (13) des lames de rotor (1).

4. Dispositif de réalisation du procédé selon l'une des revendications précédentes sur un hélicoptère, qui présente des actionneurs (5, 6) pouvant être intégrés dans l'enveloppe (4) des lames de rotor (1) de l'hélicoptère pour la torsion des lames de rotor (1) autour de leurs axes longitudinaux (9), et un système de commande pour la commande des actionneurs,
le système de commande étant constitué pour
- commander les actionneurs (5, 6) en vue de détacher la glace des surfaces (12) givrées avec une fréquence qui est plus grande, selon un multiple non entier, qu'une fréquence de rotation des lames de rotor (1) en rotation, et
- pour commander les actionneurs (5, 6) en vue de supprimer le bruit et/ou des vibrations, et les amener à provoquer des torsions stationnaires ou à des torsions cycliques des lames de rotor (1), en particulier avec le double ou le triple de la fréquence de rotation des lames de rotor (1) en rotation.

5. Dispositif selon la revendication 4, le système de commande étant constitué pour commander les actionneurs (5, 6) en vue de l'excitation de vibrations de résonance dues à la torsion des lames de rotor (1).

6. Dispositif selon la revendication 4 ou 5, le système de commande étant constitué pour commander les actionneurs (5, 6) à intervalles.

7. Dispositif selon la revendication 6, le système de commande étant constitué pour d'abord commander les actionneurs (5, 6) au début de chaque intervalle de telle sorte qu'un éventuel givrage des lames de rotor (1) peut être détecté par une variation de l'absorption d'énergie et/ou de fréquence propre des vibrations de torsion commandées des lames de rotor (1).

8. Dispositif selon l'une des revendications 4 à 7, les actionneurs (5, 6) étant des actionneurs piézoélectriques (7) plats.

9. Hélicoptère avec des lames de rotor (1) et un dispositif selon l'une des revendications 4 à 8, les actionneurs (5, 6) étant intégrés dans l'enveloppe (4) des lames de rotor (1) en aval des arêtes avant profilées (13) de celles-ci.

10. Hélicoptère selon la revendication 9 avec un dispositif selon la revendication 8, les actionneurs piézoélectriques (7) plats présentant une direction de contraction qui fait un angle aigu par rapport à l'axe longitudinal (9) de la lame de rotor (1) respective.
